(19) Europäisches Patentamt

European Patent Office

Office européen des brevets

(11) Publication number: **0 176 257 B1**

(12) EUROPEAN PATENT SPECIFICATION

(45) Date of publication of patent specification: **03.06.92**   (51) Int. Cl.⁵: **H04N 5/782**

(21) Application number: **85306070.5**

(22) Date of filing: **27.08.85**

(54) **Magnetic recording apparatus for intermittently recording a video signal.**

(30) Priority: **28.08.84 JP 179613/84**

(43) Date of publication of application:
**02.04.86 Bulletin 86/14**

(45) Publication of the grant of the patent:
**03.06.92 Bulletin 92/23**

(84) Designated Contracting States:
**DE FR GB**

(56) References cited:
**EP-A- 0 123 111**
**GB-A- 2 133 916**
**GB-A- 2 134 283**

(73) Proprietor: **MITSUBISHI DENKI KABUSHIKI KAISHA**
**2-3, Marunouchi 2-chome Chiyoda-ku**
**Tokyo 100(JP)**

(72) Inventor: **Shimoi, Hiroshi c/o Mitsubishi Denki K.K.**
**Kyoto Seisakusho 1 Babazusho**
**Nagaokakyo-shi Kyoto-fu(JP)**
Inventor: **Inatomi, Takafumi**
**14-8 Tomooka 1-chome**
**Nagaokakyo-shi Kyoto-fu(JP)**

(74) Representative: **Wright, Peter David John et al**
**R.G.C. Jenkins & Co. 26 Caxton Street**
**London SW1H 0RJ(GB)**

## Description

The present invention relates to a magnetic recording apparatus for intermittently recording a video signal and particularly relates to an apparatus for intermittently recording a video signal of the PAL system or the SECAM system.

In the prior art relating to magnetic recording and reproducing apparatus such as video tape recorders (hereinafter called VTR), an apparatus capable of intermittent recording has been proposed and put into practical use. See, for example, GB-A-2133916 and GB-A-2134283. In such a VTR, for example, a magnetic tape is fed for one frame of a video signal in response to a magnetic tape recording instruction signal so that the video signal is recorded. After the recording, the magnetic tape is stopped for a predetermined period of time and then, in response to the subsequent recording instruction signal, the magnetic tape is fed again for one frame so that the video signal is recorded. Subsequently, the same operation is repeated. The scale factor for such intermittent recording is determined in the below described manner.

Although a VTR of the VHS system is taken as an example in the following description, it is the same with VTR's of the $\beta$ system or other systems. Therefore, description of VTR's of other systems will be omitted.

First, in the case where a video signal having a field frequency of 50 Hz is used, a video tape of the E-180 type as a normal video tape for recording for the longest period can be recorded for 180 minutes (namely, 3 hours) in the standard mode. If intermittent recording is applied for 24 hours using a video tape of this type, the scale factor for intermittent recording is 24 hours/ 3 hours = 8. In other words, only one frame out of eight frames of a video signal is recorded. More specifically stated, assuming that the respective frames of the video signal are numbered consecutively as 1, 2, 3, ... and that the first frame is now recorded, intermittent recording is subsequently applied to the ninth frame, the 17th frame, ...

Then, in the case where a video signal having a field frequency of 60 Hz is used, a video tape of the T-120 type as a normal video tape for recording for the longest period can be recorded for 120 minutes (namely, 2 hours) in the standard mode. If intermittent recording is applied for 24 hours using a video tape of this type, the scale factor for intermittent recording is 24 hours/2 hours = 12.

In the same manner, the scale factor for intermittent recording for 48 hours, 72 hours etc. can easily be calculated.

A cycle for intermittent recording is equal to the product of a frame cycle of a video signal and the above stated scale factor for intermittent recording. For example, a cycle for intermittent recording with the scale factor for intermittent recording of 8 is 40 ms x 8 = 320 ms.

In the case of a video signal of the PAL or SECAM system intermittently recorded in a video tape with an even-numbered scale factor for intermittent recording, colors disappear in the video signal reproduced from the video tape. The reasons for this phenomenon will be explained in detail in the following.

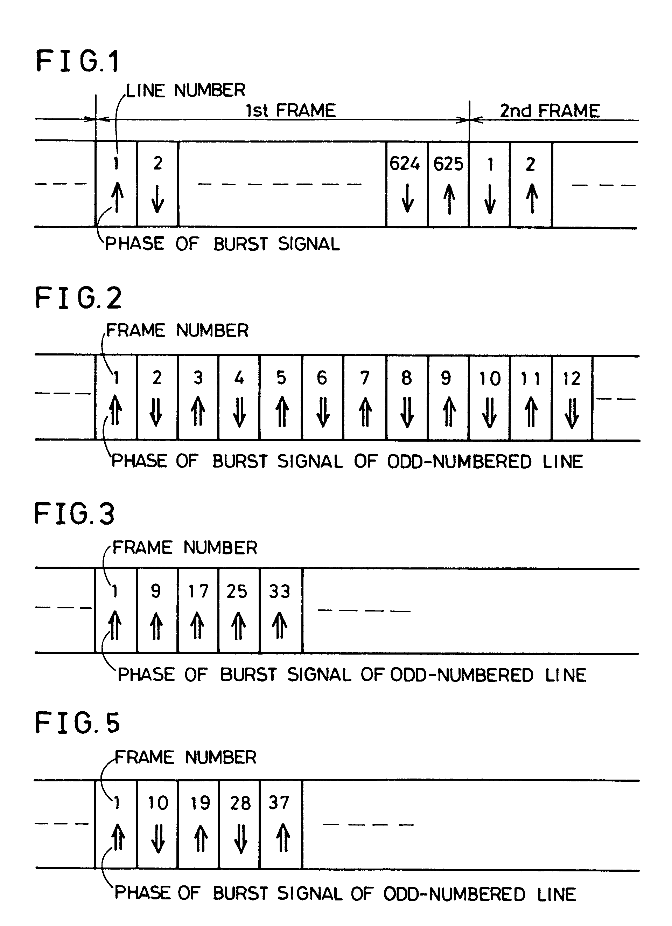

Fig. 1 is a diagram showing a relation between the line numbers of a video signal of the PAL system (hereinafter referred to as a PAL signal) having 625 horizontal scanning lines (hereinafter referred to as lines) and the phases of a burst signal. In Fig. 1, the upward arrows indicate a phase of a burst signal of + 135° and the downward arrows indicate a phase of burst signal of - 135°. In the PAL system, the phase of the burst signal changes alternately to + 135° or - 135° for each line. It is the same with the case of a PAL signal having 525 lines, if only the line number 525 is substituted for the line number 625. Accordingly, in the following explanation, a PAL signal having 625 lines and a PAL signal having 525 lines are not distinguished.

Fig. 2 is a diagram showing a relation between the frame numbers of the PAL signal shown in Fig. 1 and the phases of burst signal of the odd-numbered lines. As shown in the figure, the phases of the burst signal of the odd-numbered lines are changed for every one frame of the video signal.

Fig. 3 is a diagram showing a relation between the frame numbers and the phases of the burst signal of the odd-numbered lines in case where the video signal of the PAL system is intermittently recorded with a scale factor 8. As shown in the figure, all the phases of the burst signal in the odd-numbered lines are in the same direction and if reproduction is made in this state, a burst signal phase determining circuit in the monitor television operates erroneously, causing color disappearance or hue disturbance.

If the scale factor for intermittent recording is an even number such as 12, 16 etc., all the phases of burst signal in the odd-numbered lines of the respective frames are in the same direction and if reproduction is made in this state, such phenomenon as color disappearance or hue disturbance occurs.

In the case of a video signal of the SECAM system, the burst signal is frequency modulated by a carrier having frequency changing alternately for each line and accordingly, as in the above stated PAL system, if intermittent recording is made with an even-numbered scale factor, such phenomenon as color disappearance or hue disturbance occurs.

On the contrary, in the case of a video signal of the NTSC system, the phases of the burst signal are not changed for each line and as a result, a good picture can be reproduced without color disappearance or hue disturbance, independently of the scale factor for intermittent recording.

Thus, intermittent recording of a video signal of the PAL system or the SECAM system involves drawbacks such as color disappearance or hue disturbance dependent on a scale factor for intermittent recording.

Therefore, it would be desirable to provide a magnetic recording apparatus for intermittently recording a video signal in which such unfavorable phenomenon as color disappearance or hue disturbance never occurs at the time of reproduction of an intermittently recorded video signal of the PAL system or the SECAM system.

According to one aspect of the invention there is provided an apparatus for intermittently recording a video signal of the PAL system or the SECAM system on a magnetic record medium, comprising video signal input means for receiving a video signal to be recorded, record signal processing means for converting the video signal received by said video signal input means to a magnetically recordable signal, magnetic heads for receiving the output of said record signal processing means to intermittently record the video signal on said magnetic record medium in synchronism with the frames of the video signal such that a single frame is recorded during an interval of a predetermined number of frames, a feed mechanism for feeding said magnetic record medium, and a drive control means for driving said feed mechanism in such a manner that the magnetic record medium is fed by an amount corresponding to the distance required for the recording of one frame during said interval characterised in that said predetermined number is odd.

According to another aspect of the invention there is provided a method of recording intermittently a video signal of the PAL system or the SECAM system, in which the video signal is supplied to a recording head and is recorded intermittently and in synchronism with the frames of the video signal on a magnetic record medium, the arrangement being such that the interval between successive recording periods corresponds to the duration of n frames, characterised in that n is even, so that on reproduction of the recorded signal the phases of the burst signal in each frame are inverted with respect to the succeeding frame.

Using the techniques of the present invention, a video signal can be intermittently recorded so that the arrangement of the phases of burst signals of the video signal on the record medium may always be in the normal order. Therefore, at the time of reproduction, a video signal having a normal arrangement of the phases of the burst signal can be reproduced and a good reproduced picture without color disappearance or hue disturbance can be obtained.

An arrangement embodying the invention will now be described by way of example with reference to the accompanying drawings, in which:

Fig. 1 is a diagram showing a relation between the line numbers of a PAL signal having 625 horizontal scanning lines and the phases of the burst signal;

Fig. 2 is a diagram showing a relation between the frame numbers of the PAL signal shown in Fig. 1 and the phases of the burst signal in the odd-numbered lines;

Fig. 3 is a diagram showing a relation between the frame numbers and the phases of the burst signal in the odd-numbered lines in case where the PAL signal is intermittently recorded with a scale factor 8;

Fig. 4 is a schematic block diagram showing an embodiment of the present invention;

Fig. 5 is a diagram showing a relation between the frame numbers of the intermittently recorded PAL signal in the Fig. 4 embodiment and the phases of burst signal in the odd-numbered lines; and

Fig. 6 is a waveform diagram showing signals in the respective portions shown in Fig. 4.

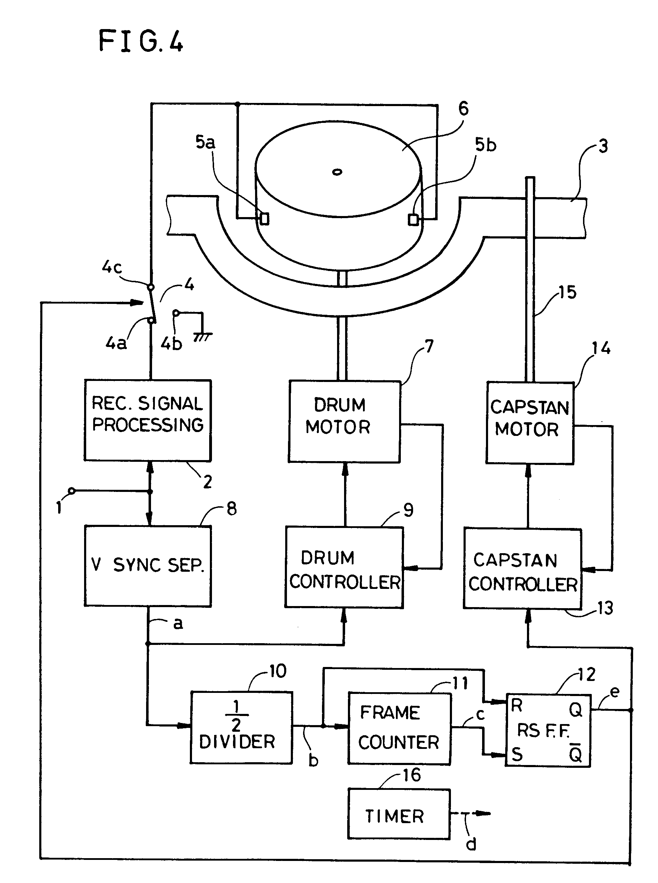

Fig. 4 is a schematic block diagram showing an embodiment of the present invention, particularly showing an embodiment for intermittently recording a PAL signal (namely, a video signal of the PAL system). In Fig. 4, the PAL signal is applied to an input terminal 1. The input terminal 1 is connected to a record signal processing circuit 2. The record signal processing circuit 2 serves to convert the applied video signal to a signal to be recorded in a magnetic tape 3. The record signal processing circuit 2 comprises, for example, a pre-emphasis circuit, a frequency modulator, a record equalizer, an amplifier etc., though not shown. The output of the record signal processing circuit 2 is supplied to magnetic heads 5a and 5b through a selection switch 4. The selection switch 4 has three terminals 4a, 4b and 4c so that the terminal 4c is turned to either the terminal 4a or the terminal 4b. The terminal 4a is connected to the record signal processing circuit 2. The terminal 4b is grounded. The terminal 4c is connected with the magnetic heads 5a and 5b. The magnetic heads 5a and 5b are mounted in prescribed positions on a rotating drum 6. The rotating drum 6 is coupled with a drum motor 7 and the rotating drum 6 is rotated by the drum motor 7.

The above stated input terminal 1 is also connected to a vertical synchronizing signal separator 8. The vertical synchronizing signal separator 8 separates and extracts from the applied video signal, only a vertical synchronizing signal and provides it as an output. The output, namely, the vertical synchronizing signal (a) from the vertical synchronizing signal separator 8 is supplied to a drum controller 9 as well as to a 1/2 frequency divider 10. The drum controller 9 receives also a detection signal as to the rotating speed and the rotating phase of the drum motor 7. The drum controller 9 performs servo control to rotate the drum motor 7 so that the vertical synchronizing signal from the vertical synchronizing signal separator 8 and the detection signal from the drum motor 7 may synchronize with each other. On the other hand, the 1/2 frequency divider 10 divides the frequency of the received vertical synchronizing signal (a) to 1/2 and generates a frame synchronizing signal (b). The output of the 1/2 frequency divider 10 is supplied to a reset terminal of an RS flip-flop 12 as well as to a frame counter 11. The frame counter 11 counts pulses included in the frame synchronizing signal from the 1/2 frequency divider 10. The frame counter 11 is adapted to count up and reset the count value to zero when nine pulses are counted. When the frame counter 11 counts up, a count-up signal (c) is provided therefrom. The count-up signal (c) is supplied to a set terminal of the RS flip-flop 12. The Q output (e) of the RS flip-flop 12 is supplied to a capstan controller 13 as a capstan drive instruction signal and is also supplied to the selection switch 4 as a selection control signal. The capstan controller 13 receives the above stated capstan drive instruction signal (e) as well as the detection signal as to the rotating speed and the rotating amount of the capstan motor 14 so that servo control is applied to the capstan motor 14. The capstan motor 14 is connected with a capstan 15. Consequently, the capstan 15 is driven by the capstan motor 14 to supply drive power to the magnetic tape 3.

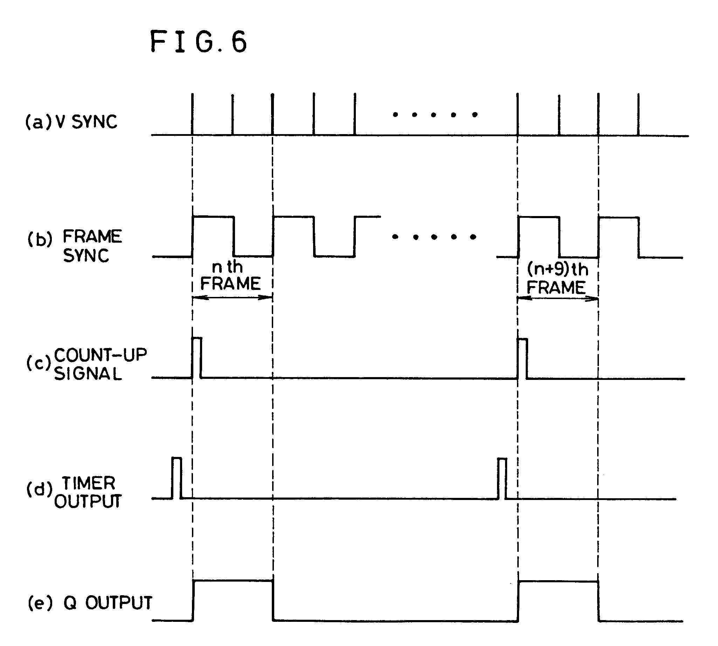

Fig. 5 is a diagram showing a relation between the frame numbers of a PAL signal intermittently recorded in the embodiment shown in Fig. 4 and the phases of the burst signal in the odd-numbered lines. Fig. 6 is a waveform diagram showing signals in the respective portions shown in Fig. 4. Fig. 6(a) shows a waveform of the vertical synchronizing signal (a) provided from the vertical synchronizing signal separator 8; Fig. 6(b) shows a waveform of the frame synchronizing signal (b) provided from the 1/2 frequency divider 10; Fig. 6(c) shows a waveform of the count-up signal (c) provided from the frame counter 11; Fig. 6(d) shows a waveform of an output (d) of a crystal timer 16 to be described later; and Fig. 6(e) shows a waveform of the Q output (e) of the flip-flop 12.

In the following, the operation of the embodiment shown in Fig. 4 will be described with reference to Figs. 5 and 6.

First, when a video signal is applied from the input terminal 1, a vertical synchronizing signal (a) as shown in Fig. 6(a) is separated and extracted therefrom by the vertical synchronizing signal separator 8. The vertical synchronizing signal (a) is supplied to the 1/2 frequency divider 10, where the frequency is divided to 1/2 and the signal is converted to a frame synchronizing signal (b) as shown in Fig. 6(b). The frame synchronizing signal (b) is supplied to the frame counter 11, where the number of pulses thereof is counted. As described previously, the frame counter 11 provides a count-up signal (c) as shown in Fig. 6(c) each time nine pulses are counted. Now assuming that a count-up signal (c) is provided from the frame counter 11 in the (n)th frame, the RS flip-flop 12 is set at the rise of this count-up signal (c). Accordingly, the Q output (e) of the RS flip-flop 12 attains a high level as shown in Fig. 6(e). In consequence, the capstan controller 13 starts to drive the capstan motor 14 so that the capstan 15 is rotated. As a result, the magnetic tape 3 is made to run along with the rotating drum 7. On the other hand, the Q output (e) of the RS flip-flop 12 is also supplied to the selection switch 4 as a selection control signal. The selection switch 4 is adapted to inter-connect the terminals 4c and 4b at the low level of the Q output (e) of the RS flip-flop 12 and to inter-connect the terminals 4c and 4a at the high level of the Q output (e). Thus, in the state of the high level of the Q output (e) of the RS flip-flop 12, the video signal processed by the record signal processing circuit 2 is supplied to the magnetic heads 5a and 5b. As a result, the video signal of the (n)th frame is recorded in the magnetic tape 3 running along with the rotating drum 6.

When the (n)th frame comes to an end and the frame synchronizing signal (b) rises as shown in Fig. 6(b), the RS flip-flop 12 is reset. As a result, the Q output (e) of the RS flip-flop 12 falls to the low level. In consequence, the driving of the capstan motor 14 by the capstan controller 13 is stopped and thus, the magnetic tape 3 stops running. In other words, the magnetic tape 3 has been made to run only for a period of the (n)th frame and the video signal of the (n)th frame has been recorded. Also in response to the above stated low level, the selection switch 4 is turned to the side of the terminal 4b so that supply of the video signal to the magnetic heads 5a and 5b is stopped.

Then, the frame counter 11 starts counting frame synchronizing signals (b) consecutively from the (n+1)th frame. The frame counter 11 does not count up until it counts nine pulses, namely, until it counts the frame synchronizing signal (b) of the (n+9)th frame. Accordingly, during a period from the (n+1)th frame to the (n+8)th frame, the RS flip-flop 12 is not set and the magnetic tape 3 is kept stopped. At the rise of the frame synchronizing signal (b) of the (n+9)th frame, the frame counter 11 counts up and provides a count-up signal (c) as shown in Fig. 6(c). As a result, the RS flip-flop 12 is set and the capstan motor 14 starts to be driven by the capstan controller 13. Thus, the magnetic tape 3 starts running. At the same time, the selection switch 4 is turned to the side of the terminal 4a so that the record signal from the record signal processing circuit 2 is supplied to the magnetic heads 5a and 5b. Consequently, the video signal of the (n+9)th frame is recorded in the magnetic tape 3. Since the magnetic tape 3 is kept stopped during a period from the (n+1)th frame to the (n+8)th frame, the video signal of the (n+9)th frame is recorded in a frame position adjacent to the frame position where the video signal of the (n)th frame has been recorded. When the frame synchronizing signal (b) rises after the end of the (n+9)th frame as shown in Fig. 6(b), the RS flip-flop 12 is reset and the magnetic tape 3 stops running. Thus, the magnetic tape 3 is made to run only for a period of the (n+9)th frame so that the video signal of the (n+9)th frame is recorded.

Subsequently, the above stated sequential operation is repeated and the video signal is intermittently recorded at intervals of nine frames. In other words, the video signal is intermittently recorded with the scale factor 9 for intermittent recording.

If the PAL signal is intermittently recorded with the scale factor 9 as in the above stated embodiment, the phases of burst signal in the odd-numbered lines are inverted for each frame. As a result, a good picture can be reproduced without color disappearance or hue disturbance.

Although in the above described embodiment the scale factor for intermittent recording is set to 9, other odd-numbered scale factors may also be applied in this invention to perform intermittent recording. Such odd-numbered scale factors can be easily set by changing the count-up value of the frame counter 11 for example. It can be easily understood from the arrangement of the phases of burst signal shown in Fig. 2 that the same effect as in the above described embodiment will be attained with such other odd-numbered scale factors.

Although in the above described embodiment a time interval corresponding to the scale factor for intermittent recording is set by the frame counter 11, a crystal timer 16 as shown in Fig. 4 may be provided instead of the frame counter 11 and a time interval corresponding to the scale factor for intermittent recording may be set by this crystal timer 16. An output (d) of the crystal timer 16 is shown in Fig. 6(d). In this case, if a flip-flop adapted to be set at the rise of the output (d) of the crystal timer 16 and to be reset at the fall of the frame synchronizing signal (c) is further provided so that the $\overline{Q}$ output of this flip-flop may be supplied to the set input terminal of the RS flip-flop 12, it is made possible to synchronize the output (d) of the crystal timer 16 with the frame synchronizing signal (c).

Further, although the above described embodiment intermittently records the PAL signal, the present invention may also be applied to intermittent recording of a video signal of the SECAM system. In this case, intermittent recording can be made also with any odd-numbered scale factor.

In addition, the present invention is applicable to VTR's of both of the VHS standard and the $\beta$ standard.

Further, the present invention is applicable to both a video signal having 625 lines and a field frequency of 50 Hz, and a video signal having 525 lines, and a field frequency of 60 Hz.

Further, although in the above embodiment a VTR having a single function of intermittent recording was described, the present invention may also be structured as a VTR having other various ordinary functions.

Further, although in the above embodiment a VTR was described, the present invention may also be applied to other magnetic recording and reproducing apparatus, for example, apparatus for recording or reproducing a video signal on or from a magnetic disc or a magnetic drum. In such a case as well, a magnetic record medium will be intermittently driven at intervals of a specified odd number of frames in the same manner as in the above embodiment.

As previously stated, the scale factor for intermittent recording for 24 hours using a video tape of the E-180 type is 8, while the scale factor for intermittent recording in this invention needs to be an odd number. For this reason, if 7 is adopted as a value in the vicinity of 8, the time for intermittent recording is 3 hours x 7 = 21 hours, and if 9 is adopted, the time for intermittent recording is 3 hours x 9 = 27 hours. Therefore, if intermittent recording is to be applied for at least 24 hours using a video tape of the E-180 type, the scale factor for intermittent recording needs only to be set to 9. It is the same with the cases of intermittent recording for 48 hours, 72 hours etc., if only the scale factor for intermittent recording is made an odd number by adding 1 to a corresponding even-numbered scale factor. Thus, no inconvenience is caused by such addition of 1 to obtain an odd number as the scale factor for intermittent recording.

**Claims**

1. An apparatus for intermittently recording a video signal of the PAL system or the SECAM system on a magnetic record medium (3), comprising:

video signal input means (1) for receiving a video signal to be recorded,

record signal processing means (2) for converting the video signal received by said video signal input means (1) to a magnetically recordable signal,

magnetic heads (5a, 5b) for receiving the output of said record signal processing means to intermittently record the video signal on said magnetic record medium in synchronism with the frames of the video signal such that a single frame is recorded during an interval of a predetermined number of frames,

a feed mechanism (13-15) for feeding said magnetic record medium, and

a drive control means (8-12) for driving said feed mechanism in such a manner that the magnetic record medium is fed by an amount corresponding to the distance required for the recording of one frame during said interval;

characterised in that said predetermined number is odd.

2. An apparatus for intermittently recording a video signal as set forth in claim 1, said apparatus comprising a video tape recorder.

3. An apparatus for intermittently recording a video signal as set forth in claim 1 or claim 2, further comprising switching means (4) for applying the output of said record signal processing means (2) to said magnetic heads (5a, 5b) only at the time when said feed mechanism (13-15) feeds said magnetic record medium (3).

4. An apparatus for intermittently recording a video signal as set forth in any preceding claim, wherein

said video signal received by said video signal input means includes a horizontal synchronizing signal and a vertical synchronizing signal together with a picture signal, and

said drive control means (8-12) is arranged to provide an intermittent drive control signal for intermittently driving said feed mechanism (13-15), based on said vertical synchronizing signal.

5. An apparatus for intermittently recording a video signal as set forth in claim 4, wherein said drive control means (8-12) comprises:

a vertical synchronizing signal separating circuit (8) for separating and extracting said vertical synchronizing signal from said video signal,

frame synchronizing signal generating means (10) for generating a frame synchronizing signal based on said vertical synchronizing signal separated and extracted by said vertical synchronizing signal separating circuit (8),

counter means (11) for counting the number of said frame synchronizing signals to provide a count-up signal at intervals of said predetermined odd number of frames, and

logical circuit means (12) for forming said intermittent drive control signal based on said frame synchronizing signal and said count-up signal.

6. An apparatus for intermittently recording a video signal as set forth in claim 4, wherein said drive control means (8-12) comprises:

a vertical synchronizing signal separating circuit (8) for separating and extracting said vertical synchronizing signal from said video signal,

frame synchronizing signal generating means (10) for generating a frame synchronizing signal based on said vertical synchronizing signal separated and extracted by said vertical synchronizing signal separating circuit (8),

timer means (16) for providing a timing signal at intervals of said predetermined odd number of frames, and

logical circuit means (12) for forming said intermittent drive control signal based on said frame synchronizing signal and said timing signal.

7. A method of recording intermittently a video signal of the PAL system or the SECAM system, in which the video signal is supplied to a recording head (5a,5b) and is recorded intermittently and in synchronism with the frames of the video signal on a magnetic record medium (3), the arrangement being such that the interval between successive recording periods corresponds to the duration of n frames, characterised in that n is even, so that on reproduction of the recorded signal the phases of the burst signal in each frame are inverted with respect to the succeeding frame.

8. A method as set forth in claim 7, wherein each single recording period corresponds to a single frame of the video signal.

**Revendications**

1. Un dispositif pour enregistrer par intermittence un signal vidéo du système PAL ou du système SECAM sur un support d'enregistrement magnétique (3), comprenant :

des moyens d'entrée de signal vidéo (1) destinés à recevoir un signal vidéo à enregistrer,

des moyens de traitement de signal d'enregistrement (2) destinés à convertir le signal vidéo qui est reçu par les moyens d'entrée de signal vidéo (1), pour donner un signal pouvant être enregistré de façon magnétique,

des têtes magnétiques (5a, 5b) destinées à recevoir le signal de sortie des moyens de traitement de signal d'enregistrement pour enregistrer par intermittence le signal vidéo sur le support d'enregistrement magnétique, en synchronisme avec les images du signal vidéo, de façon qu'une seule image soit enregistrée pendant un intervalle correspondant à un nombre d'images prédéterminé,

un mécanisme d'avance (13-15) destiné à faire avancer le support d'enregistrement magnétique, et

des moyens de commande d'entraînement (8-12) destinés à entraîner le mécanisme d'avance d'une manière telle que le support d'enregistrement magnétique soit avancé d'une quantité correspondant à la distance exigée pour l'enregistrement d'une image pendant l'intervalle précité ;

caractérisé en ce que le nombre prédéterminé est impair.

2. Un dispositif pour enregistrer par intermittence un signal vidéo selon la revendication 1, ce dispositif consistant en un magnétoscope.

3. Un dispositif pour enregistrer par intermittence un signal vidéo selon la revendication 1 ou la revendication 2, comprenant en outre des moyens de commutation (4) destinés à appliquer le signal de sortie des moyens de traitement de signal vidéo (2) aux têtes magnétiques (5a, 5b) seulement au moment auquel le mécanisme d'avance (13-15) fait avancer le support d'enregistrement magnétique (3).

4. Un dispositif pour enregistrer par intermittence un signal vidéo selon l'une quelconque des revendications précédentes, dans lequel :

le signal vidéo qui est reçu par les moyens d'entrée de signal vidéo comprend un signal de synchronisation horizontale et un signal de synchronisation verticale accompagnant un signal d'image, et

les moyens de commande d'entraînement (8-12) sont conçus de façon à produire un signal de commande d'entraînement intermittent pour entraîner par intermittence le mécanisme d'avance (13-15), sur la base du signal de synchronisation verticale.

5. Un dispositif pour enregistrer par intermittence un signal vidéo selon la revendication 4, dans lequel les moyens de commande d'entraînement (8-12) comprennent :

un circuit de séparation de signal de synchronisation verticale (8) qui est destiné à séparer et à extraire du signal vidéo le signal de synchronisation verticale,

des moyens de génération de signal de synchronisation d'image (10) qui sont destinés à générer un signal de synchronisation d'image qui est basé sur le signal de synchronisation verticale séparé et extrait par le circuit de séparation de signal de synchronisation verticale (8),

des moyens de comptage (11) destinés à compter le nombre des signaux de synchronisation d'image pour produire un signal de fin de comptage à des intervalles correspondant au nombre impair prédéterminé d'images, et

un circuit logique (12) destiné à élaborer le signal de commande d'entraînement intermittent sur la base du signal de synchronisation d'image et du signal de fin de comptage.

6. Un dispositif pour enregistrer par intermittence un signal vidéo selon la revendication 4, dans lequel les moyens de commande d'entraînement (8-12) comprennent :

un circuit de séparation de signal de synchronisation verticale (8) destiné à séparer et à extraire du signal vidéo le signal de synchronisation verticale,

des moyens de génération de signal de synchronisation d'image (10) qui sont destinés à générer un signal de synchronisation d'image sur la base du signal de synchronisation verticale séparé et extrait par le circuit de séparation de synchronisation verticale (8),

des moyens temporisateurs (16) destinés à produire un signal de temporisation à des intervalles correspondant au nombre impair prédéterminé d'images, et

un circuit logique (12) qui est destiné à élaborer le signal de commande d'entraînement intermittent sur la base du signal de synchronisation d'image et du signal de temporisation.

7. Un procédé d'enregistrement intermittent d'un signal vidéo du système PAL ou du système SECAM, dans lequel le signal vidéo est appliqué à une tête d'enregistrement (5a, 5b) et il est enregistré par intermittence sur un support d'enregistrement magnétique (3), en synchronisme avec les images du signal vidéo, avec une configuration telle que l'intervalle entre des périodes d'enregistrement successives correspond à la durée de n images, caractérisé en ce que n est pair, de façon qu'au moment de la reproduction du signal enregistré, les phases du signal de salve dans chaque image soient inversées par rapport à l'image suivante.

8. Un procédé selon la revendication 7, dans lequel chaque période d'enregistrement correspond à une seule image du signal vidéo.

**Patentansprüche**

1. Gerät zum intermittierenden Aufzeichnen eines Videosignales des PAL-Systemes oder des SECAM-Systemes auf ein magnetisches Aufzeichnungemedium (3), mit:
einem Videosignaleingangsmittel (1) zum Empfangen eines aufzuzeichnenden Videosignales, einem Aufzeichnungssignalverarbeitungsmittel (2) zum Umwandeln des durch das Videosignaleingangsmittel (1) empfangenen Videosignales in ein magnetisch aufzeichenbares Signal, Magnetköpfen (5a, 5b) zum Empfangen des Ausgangssignales des Aufzeichnungssignalverarbeitungsmittels zum intermittierenden Aufzeichnen des Videosignales auf das magnetische Aufzeichnungsmedium in Synchronisation mit dem Videosignal derart, daß ein Einzelbild während eines Intervalles einer vorbestimmten Zahl von Bildern aufgezeichnet wird,
einem Vorschubmechanismus (13 - 15) zum Vorschieben des magnetischen Aufzeichnungsmediums und
einem Antriebssteuermittel (8 - 12) zum Antreiben des Vorschubmechanismus auf solche Weise, daß das magnetische Aufzeichnungsmedium um einen Betrag vorgeschoben wird, der dem Abstand entspricht, der zum Aufzeichnen eines Bildes während des Intervalles benötigt wird;
dadurch gekennzeichnet, daß die vorbestimmte Zahl ungerade ist.

2. Gerät zum intermittierenden Aufzeichnen eines Videosignales nach Anspruch 1, das einen Videotaperecoder aufweist.

3. Gerät zum intermittierenden Aufzeichnen eines Videosignales nach Anspruch 1 oder 2, weiter mit einem Schaltmittel (4) zum Anlegen des Ausgangssignales des Aufzeichnungssignalverarbeitungsmittels (2) an die Magnetköpfe (5a, 5b) nur zu dem Zeitpunkt, wenn der Vorschubmechanismus (13 - 15) das magnetische Aufzeichnungsmedium (3) vorschiebt.

4. Gerät zum intermittierenden Aufzeichnen eines Videosignales nach einem der vorhergehenden Ansprüche, bei dem das von dem Videosignaleingangsmittel empfangene Videosignal ein horizontales Synchronisationssignal und ein vertikales Synchronisationssignal zusammen mit dem Bildsignal enthält und
das Antriebssteuermittel (8 - 12) so ausgelegt ist, daß es ein intermittierendes Antriebssteuersignal zum intermittierenden Antreiben des Vorschubmechanismus (13 - 15) auf der Grundlage des vertikalen Synchronisationssignales vorsieht.

5. Gerät zum intermittierenden Aufzeichnen eines Videosignales nach Anspruch 4, bei dem das Antriebssteuermittel (8 - 12) aufweist:
eine Vertikalsynchronisationssignaltrennschaltung (8) zum Trennen und Herausziehen des vertikalen Synchronisationssignales aus dem Videosignal,
ein Bildsynchronisationssignalerzeugungsmittel (10) zum Erzeugen eines Bildsynchronisationssignales auf der Grundlage des von der Vertikalsynchronisationssignaltrennschaltung (8) getrennten und herausgezogenen vertikalen Synchronisationssignales,
ein Zählmittel (11) zum Zählen der Zahl der Bildsynchronisationssignale zum Vorsehen eines hochgezählten Signales zu Intervallen der vorbestimmten ungeraden Zahl von Bildern und
ein Logikschaltungsmittel (12) zum Bilden des intermittierenden Antriebssteuersignales auf der Grundlage des Bildsynchronisationssignales und des hochgezählten Signales.

6. Gerät zum intermittierenden Aufzeichnen eines Videosignales nach Anspruch 4, bei dem das Antriebssteuermittel (8 - 12) aufweist:
eine Vertikalsynchronisationssignaltrennschaltung (8) zum Trennen und Herausziehen des vertikalen Synchronisationssignales aus dem Videosignal,
ein Bildsynchronisationssignalerzeugungsmittel (10) zum Erzeugen eines Bildsynchronisationssignales auf der Grundlage des von der Vertikalsynchronisationssignaltrennschaltung (8) getrennten und herausgezogenen vertikalen Synchronisationssignales,
ein Zeitmittel (16) zum Vorsehen eines Zeitsignales bei Intervallen der vorbestimmten ungeraden Zahl von Bildern und

ein Logikschaltungsmittel (12) zum Bilden des intermittierenden Antriebssteuersignales auf der Grundlage des Bildsynchronisationssignales und des Zeitsignales.

7. Verfahren zum intermittierenden Aufzeichnen eines Videosignales des PAL-Systemes oder des SECAM-Systemes, bei dem das Videosignal einem Aufzeichnungskopf (5a, 5b) zugeführt wird und intermittierend und synchron zu den Bildern des Videosignales auf einem magnetischen Aufzeichnungsmedium (3) aufgezeichnet wird, wobei die Anordnung derart ist, daß das Intervall zwischen aufeinanderfolgenden Aufzeichnungsperioden der Dauer von n Bildern entspricht, dadurch gekennzeichnet, daß n gerade ist, so daß bei der Wiedergabe des aufgezeichneten Signales die Phasen des Burst-Signales in jedem Bild in Bezug auf das folgende Bild invertiert sind.

8. Verfahren nach Anspruch 7, bei dem jede einzelne Aufzeichnungsperiode einem Einzelbild des Videosignales entspricht.

EP 0 176 257 B1

# FIG.1

LINE NUMBER

1st FRAME | 2nd FRAME

| 1 | 2 | | 624 | 625 | 1 | 2 | |
| ↑ | ↓ | | ↓ | ↑ | ↓ | ↑ | |

PHASE OF BURST SIGNAL

# FIG.2

FRAME NUMBER

| 1 | 2 | 3 | 4 | 5 | 6 | 7 | 8 | 9 | 10 | 11 | 12 |
| ⇑ | ⇓ | ⇑ | ⇓ | ⇑ | ⇓ | ⇑ | ⇓ | ⇑ | ⇓ | ⇑ | ⇓ |

PHASE OF BURST SIGNAL OF ODD-NUMBERED LINE

# FIG.3

FRAME NUMBER

| 1 | 9 | 17 | 25 | 33 |
| ⇑ | ⇑ | ⇑ | ⇑ | ⇑ |

PHASE OF BURST SIGNAL OF ODD-NUMBERED LINE

# FIG.5

FRAME NUMBER

| 1 | 10 | 19 | 28 | 37 |
| ⇑ | ⇓ | ⇑ | ⇓ | ⇑ |

PHASE OF BURST SIGNAL OF ODD-NUMBERED LINE

10

# FIG.4

EP 0 176 257 B1

# FIG. 6

(a) V SYNC

(b) FRAME SYNC

nth FRAME

(n+9)th FRAME

(c) COUNT-UP SIGNAL

(d) TIMER OUTPUT

(e) Q OUTPUT